# FASCICULE DE BREVET EUROPEEN

(11) **EP 3 079 890 B1**
(45) Date de publication et mention de la délivrance du brevet: **06.02.2019**
(21) Numéro de dépôt: 14809038.4
(22) Date de dépôt: 09.12.2014
(51) Int. Cl.: B29D 30/06

(54) **MOULE À SECTEURS POUR PNEUMATIQUE COMPRENANT DES PLATEAUX DE SUPPORT ISOLANTS, ET PROCÉDÉ DE MOULAGE ASSOCIÉ**
SEGMENTIERTES REIFENFORMWERKZEUG MIT ISOLIERTEN TRAGPLATTEN UND ZUGEHÖRIGES FORMGEBUNGSVERFAHREN
SEGMENTED MOULD FOR TIRES HAVING INSULATED SUPPORTING PLATES AND ASSOCIATED MOULDING PROCESS

(30) Priorité: 10.12.2013 FR 1362344
(43) Date de publication de la demande: 19.10.2016
(73) Titulaire: Compagnie Générale des Etablissements Michelin, 63000 Clermont-Ferrand (FR)
(72) Inventeur: MASSOPTIER-DAVID, Mickaël, F-63040 Clermont-Ferrand Cedex 09 (FR); SIMONELLI, Thomas, F-63040 Clermont-Ferrand Cedex 09 (FR); WALRAND, Gilles, F-63040 Clermont-Ferrand Cedex 09 (FR)
(74) Mandataire: Noel, Luminita
(86) Numéro de dépôt international: PCT/EP2014/077015
(87) Numéro de publication internationale: WO 2015/086580

(56) Documents cités:
- EP-A1- 2 000 290
- EP-A2- 0 578 105
- WO-A1-2011/136097
- US-A- 4 568 259
- US-A1- 2013 284 336
- US-B1- 8 597 008

## Description

La présente invention concerne le domaine des moules de cuisson ou vulcanisation pour pneumatiques de véhicules, et plus particulièrement les moules du type à secteurs.

Ce type de moule comprend principalement deux coquilles assurant chacune le moulage d'un des flancs latéraux du pneumatique, une pluralité de secteurs assurant le moulage de la bande de roulement dudit pneumatique et mobiles radialement entre une position d'ouverture et une position de fermeture du moule, et au moins une couronne de serrage pour permettre le déplacement radial des secteurs.

Les coquilles et les secteurs définissent un espace intérieur destiné à être mis en contact avec l'ébauche du pneumatique non vulcanisée. Pour plus de détails sur un tel type de moule à secteurs, on pourra par exemple se référer aux documents DE 1 808 811, US 3 797 979, EP-A2-0 701 894 et EP-B1-2 040 911.

La fabrication du pneumatique, et plus particulièrement la phase de vulcanisation, nécessite d'appliquer une pression sur l'ébauche afin de la plaquer contres les faces internes du moule et d'apporter de la chaleur au moule. Il est par exemple connu de chauffer le moule au moyen d'un fluide caloporteur tel que de la vapeur d'eau sous pression comme cela est décrit dans la demande de brevet EP-A1-2 072 235.

Il est également connu de chauffer le moule électriquement ou encore par induction magnétique comme cela est illustré dans le document JP-A-2012-25126. Dans ce document, des premiers moyens de chauffage sont montés sur les coquilles radialement du côté intérieur du moule et des deuxièmes moyens de chauffage sont montés à la fois sur les coquilles et sur les secteurs.

On se réfère également aux documents WO 2011/136097 A1 et EP 0 578 105 A2. La chaleur est ainsi produite directement dans le moule, ce qui permet d'obtenir un rendement énergétique satisfaisant. Par ailleurs, un tel montage des moyens de chauffage à induction magnétique favorise l'obtention d'une température homogène dans le moule.

Toutefois, afin d'optimiser la cuisson du pneumatique, il est nécessaire de chauffer et de maintenir les deux coquilles du moule à une température différente de celle à laquelle sont amenés les secteurs. En outre, il peut également être nécessaire pour chacune des coquilles de chauffer et de maintenir des zones distinctes à des températures différentes.

La présente invention vise à répondre à ces exigences.

Plus particulièrement, la présente invention vise à prévoir un moule à secteurs présentant un bon rendement énergétique et permettant de pouvoir chauffer et maintenir les coquilles et les secteurs à des niveaux de température différents de façon stable au cours de la phase de cuisson du pneumatique.

La présente invention vise à prévoir un moule à secteurs permettant de pouvoir chauffer et maintenir des zones distinctes de chaque coquille à des températures différentes.

Dans un mode de réalisation, le moule est destiné à un pneumatique du type comprenant une bande de roulement et deux flancs latéraux. Le moule comprend des première et deuxième coquilles destinées à assurer le moulage des flancs latéraux du pneumatique, une pluralité de secteurs répartis dans le sens circonférentiel et destinés à assurer le moulage de la bande de roulement dudit pneumatique, et des premier et deuxième plateaux de support comprenant chacun une face d'appui contre laquelle est montée axialement en contact la coquille associée.

Le moule comprend également une pluralité de premiers moyens de chauffage pour chauffer au moins la première coquille et une pluralité de deuxièmes moyens de chauffage pour chauffer au moins la deuxième coquille. Chaque plateau de support comprend au moins un corps réalisé en matériau isolant thermiquement et délimitant la face d'appui dudit plateau. Au moins un évidement est formé sur ladite face d'appui et à l'intérieur duquel sont logés les premiers ou deuxièmes moyens de chauffage associés.

La prévision du corps de chaque plateau de support en un matériau isolant thermiquement combinée au montage des moyens de chauffage associés à l'intérieur d'au moins un évidement prévu sur la face d'appui dudit corps permet d'obtenir un moule à rendement énergétique satisfaisant. En outre, il est possible de maintenir les coquilles et les secteurs à des températures différentes. La réalisation de chaque plateau en un matériau isolant thermiquement permet de limiter les échanges thermiques au sein des plateaux et de pouvoir conserver une répartition hétérogène de température à l'intérieur du moule. Ceci permet de pouvoir optimiser la cuisson du pneumatique.

Dans un mode de réalisation préféré, une pluralité d'évidements espacés est formée sur la face d'appui de chaque plateau de support et à l'intérieur de chacun duquel est logé un des premiers ou deuxièmes moyens de chauffage. Avantageusement, chaque moyen de chauffage est apte à générer de la chaleur indépendamment de l'activation des autres moyens de chauffage. De préférence, le ou les évidements de chaque plateau de support sont orientés axialement vers l'intérieur dudit moule. Le ou les évidements de chaque plateau de support peuvent être réalisés sous la forme de rainures annulaires et concentriques.

Dans un mode de réalisation, les premiers et deuxièmes moyens de chauffage comprennent chacun au moins un premier groupe de moyens de chauffage disposés axialement en regard de la coquille associée. Les premiers et deuxièmes moyens de chauffage peuvent comprendre chacun au moins un deuxième groupe de moyens de chauffage disposés axialement en regard des secteurs.

De préférence, les secteurs sont montés axialement en contact contre les faces d'appui des plateaux de support dans la position de fermeture du moule.

Le moule peut encore comprendre au moins une couronne de serrage coopérant avec des faces extérieures des secteurs.

De manière avantageuse, le corps de chaque plateau de support est réalisé en matériau isolant thermiquement présentant une conductivité thermique inférieure à celles des matériaux des secteurs et des coquilles. Le corps de chaque plateau de support peut être réalisé en un matériau non métallique, notamment en un matériau composite.

Dans un mode de réalisation, le corps de chaque plateau de support présente une épaisseur axiale comprise entre 35 mm et 60 mm.

De préférence, les premiers et deuxièmes moyens de chauffage sont électriques.

L'invention concerne également un procédé de moulage d'un pneumatique à l'aide d'un moule tel que défini précédemment, dans lequel on commande le fonctionnement des premiers et deuxièmes moyens de chauffage pour chauffer les deux coquilles à une température différente de celle à laquelle sont chauffés les secteurs du moule.

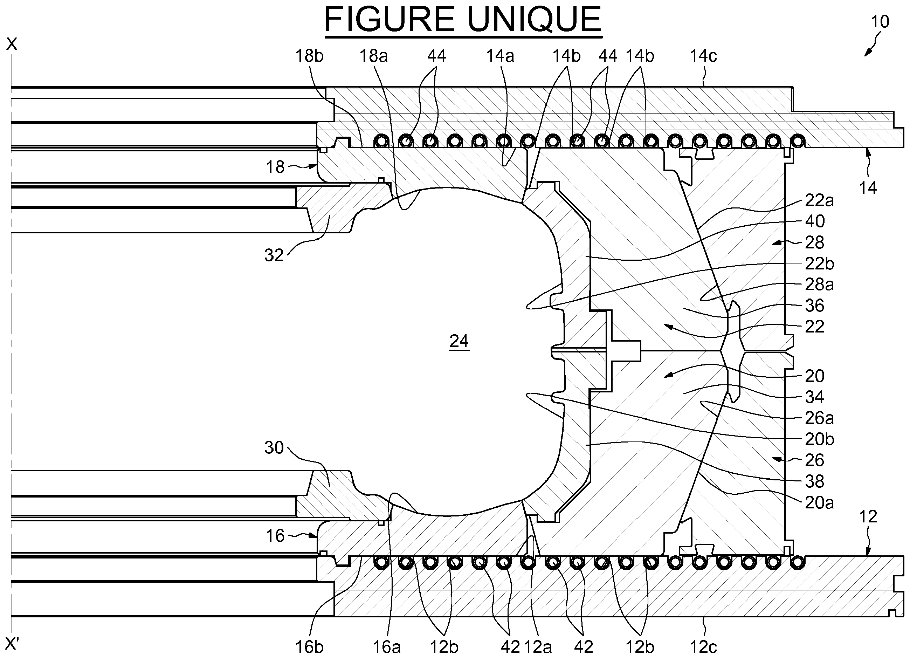

La présente invention sera mieux comprise à la lecture de la description détaillée d'un mode de réalisation pris à titre d'exemple nullement limitatif et illustré par la figure annexée qui est une demi-vue en coupe d'un moule à secteurs pour pneumatique selon un exemple de réalisation de l'invention dans une position de fermeture dudit moule.

Sur la figure, on a représenté un exemple de réalisation d'un moule à secteurs, référencé 10 dans son ensemble, prévu pour la cuisson ou vulcanisation d'un pneumatique de forme annulaire et comprenant une bande de roulement cylindrique prolongée par des premier et second flancs latéraux opposés. Le pneumatique est pour véhicule automobile pouvant par exemple être un véhicule de tourisme, un véhicule utilitaire ou un véhicule de type poids lourd. Sur la figure, le moule 10 est illustré dans une position supposée verticale. Le moule 10 présente un axe X-X' de symétrie qui coïncide avec l'axe de révolution du pneumatique.

Le moule 10 comprend des plateaux 12, 14 inférieur et supérieur, deux coquilles 16, 18 annulaires inférieure et supérieure montées en appui contre les plateaux en étant axialement en regard, et une couronne de secteurs 20 inférieurs et 22 supérieurs disposés axialement entre les plateaux 12, 14 et entourant radialement les coquilles 16, 18. Les coquilles 16, 18 et les secteurs 20, 22 sont centrés sur l'axe X-X'. Les secteurs 20, 22 sont répartis circonférentiellement autour dudit axe. Les secteurs 20 inférieurs sont axialement en appui contre les secteurs 22 supérieurs. Les secteurs 20 sont identiques entre eux et symétriques par rapport aux secteurs 22 en considérant un plan médian radial du moule 10.

Les secteurs 20, 22 sont mobiles conjointement radialement entre une position rapprochée par rapport aux coquilles 16, 18 telle qu'illustrée sur la figure correspondant à une position de fermeture du moule 10, et une position éloignée d'ouverture dudit moule. Dans la position de fermeture, les coquilles 16, 18 et la pluralité de secteurs 20, 22 délimitent conjointement une empreinte 24 du pneumatique. La position de fermeture du moule 10 correspond à la position de moulage du pneumatique.

Le moule 10 comprend également une couronne 26 de serrage inférieure solidaire du plateau 12 inférieur et comprenant une face intérieure 26a de forme tronconique venant en appui radialement contre une face extérieure 20a complémentaire de chaque secteur 20 inférieur. Le moule 10 comprend encore une couronne 28 de serrage supérieure solidaire du plateau 14 supérieur et comprenant une face intérieure 28a de forme tronconique venant en appui radialement contre une face extérieure 22a complémentaire de chaque secteur 20 supérieur. Les couronnes 26, 28 de serrage sont axialement en regard l'une par rapport à l'autre et laissent subsister entre elles un léger jeu axial. De manière connue en soi, chaque secteur 20, 22 est relié à la couronne 26, 28 de serrage associée par l'intermédiaire d'une glissière (non visible) de sorte qu'un mouvement axial de ladite couronne provoque le déplacement radial des secteurs 20, 22 associés entre la position de fermeture et la position d'ouverture du moule, ou inversement.

Chaque coquille 16, 18 comprend une face interne 16a, 18a annulaire pour le moulage des flancs latéraux du pneumatique. La face interne 16a est axialement en regard de la face interne 18a opposée. Les faces internes 16a, 18a sont symétriques entre elles par rapport au plan médian radial du moule 10. Une face externe 16b, 18b radiale de chaque coquille est montée axialement en appui contre une face interne 12a, 14a radiale du plateau 12, 14 associé. La face externe 16b, 18b de chaque coquille est axialement opposée à la face interne 16a, 18a. Chaque plateau 12, 14 forme un plateau de support de la coquille 16, 18 associée. Chaque coquille 16, 18 est fixée sur le plateau 12, 14 de support associé. Chaque plateau 12, 14 est situé axialement du côté opposé à l'empreinte 24 délimitée par les coquilles 16, 18 et les secteurs 20, 22.

Chaque secteur 20, 22 comprend également une face intérieure 20b, 22b, radialement opposée à la face extérieure 20a, 22a tronconique, pour assurer le moulage de la bande de roulement du pneumatique. Dans la description, les termes « interne » et « externe » sont utilisés pour définir une orientation des faces selon le sens ou la direction radiale tandis que les termes « intérieur » et « extérieur » sont utilisés pour définir une orientation des faces selon le sens ou la direction axiale.

Le moule 10 comprend encore deux talons 30, 32 annulaires inférieur et supérieur montés en appui contre les coquilles 16, 18 pour le moulage des talons latéraux du pneumatique. Dans l'exemple de réalisation illustré, les talons sont des pièces rapportées et fixées sur les coquilles 16, 18. Alternativement, les talons 30, 32 peuvent être réalisés monoblocs avec lesdites coquilles.

Dans l'exemple de réalisation illustré, chaque secteur 20, 22 comprend un support 34, 36 délimitant la face extérieure 20a, 22a en contact contre la couronne 26, 28 de serrage, et une garniture 38, 40 de moulage fixée sur le support et délimitant la face intérieure 20b, 22b portant l'empreinte de la bande de roulement du pneumatique. La garniture 38, 40 est située radialement du côté intérieur du support 34, 36 associé. Le support 34, 36 peut être réalisé en matière métallique, notamment en acier, et la garniture 38, 40 de moulage en aluminium. Les coquilles 16, 18 et les talons 30, 32 peuvent être réalisées en matière métallique, notamment en acier.

Dans la position de fermeture du moule 10, les secteurs 20 inférieurs, respectivement 22 supérieurs, sont radialement en contact contre la coquille 16, respectivement 18. Les coquilles 16, 18 et les secteurs 20, 22 sont en contact dans le sens radial par l'intermédiaire des garnitures 38, 40 de moulage. La face intérieure 20b, 22b de chaque secteur 20, 22 prolonge localement la face interne 16a, 18a de la coquille associée.

Le moule 10 comprend encore une pluralité de moyens de chauffage 42, 44 inférieurs et supérieurs montés respectivement sur les plateaux 12, 14 de support inférieur et supérieur. Chaque moyen de chauffage 42, 44 est électrique et avantageusement réalisé sous la forme d'une résistance électrique chauffante. Chaque moyen de chauffage 42, 44 électrique est apte à générer de la chaleur indépendamment du fonctionnement des autres moyens de chauffage. Les moyens de chauffage 42, 44 sont identiques entre eux.

Pour permettre le montage des moyens de chauffage 42 et 44, chaque plateau 12, 14 comprend une pluralité de rainures 12b, 14b formées sur la face interne 12a, 14a qui forme une face d'appui contre laquelle est montée axialement directement en contact la coquille 16, 18 associée. Dans la position de fermeture du moule 10, les faces externes des secteurs 20, 22 sont en contact axialement contre la face interne 12a, 14a du plateau associé. Dans cette position de fermeture, un jeu axial existe entre chaque couronne 26, 28 de serrage et la face interne 12a, 14a du plateau axialement en regard.

Les rainures 12b, 14b de chaque plateau s'étendent axialement en direction d'une face externe 12c, 14c radiale dudit plateau qui est axialement opposée à la face interne 12a, 14a et destinée à venir axialement en appui contre la presse de vulcanisation associée (non représentée). Les rainures 12b, 14b s'étendent axialement vers l'extérieur dans l'épaisseur du plateau 12, 14 à partir de la face interne 12a, 14a. Le fond de chaque rainure 12b, 14b est décalé axialement vers l'extérieur par rapport à la face interne 12a, 14a du plateau. Chaque rainure 12b, 14b est ouverte et orientée axialement vers l'intérieur du moule, i.e. axialement du côté des coquilles 16, 18, des secteurs 20, 22 et des couronnes 26, 28 de serrage. Chaque rainure 12b, 14b formant évidement débouche sur la face interne 12a, 14a. Dans l'exemple de réalisation illustré, les rainures 12b, 14b sont annulaires et concentriques d'axe X-X'.

Les rainures 12b, 14b d'un plateau sont identiques entre elles et disposées sur la face interne 12a, 14a dudit plateau avec un espacement radial régulier. Les rainures 12b du plateau inférieur sont symétriques par rapport aux rainures 14b du plateau supérieur en considérant le plan médian radial du moule 10. Dans l'exemple de réalisation illustré, les rainures 12b, 14c présentent en section droite un profil en U. Alternativement, les rainures pourraient présenter un autre profil, par exemple étagé, ou encore carré ou rectangulaire.

Dans l'exemple de réalisation illustré, les rainures 12b, 14b forment trois groupes sur chaque plateau. Pour chaque plateau 12, 14 de support, les rainures du premier groupe entourent radialement la coquille 16, 18, les rainures du deuxième groupe entourent radialement les secteurs 20, 22 et les rainures du troisième groupe entourent radialement la couronne 26, 28 de serrage. Les groupes de rainures 12b, 14b de chaque plateau sont respectivement disposés radialement à la périphérie de la coquille 16, 18, des secteurs 20, 22 et de la couronne 26, 28 de serrage. Les premier, deuxième et troisième groupes de rainures 12b, 14b de chaque plateau sont respectivement axialement en regard des faces externes de la coquille 16, 18, des secteurs 20, 22 et de la couronne 26, 28.

Chaque moyen de chauffage 42 inférieur est logé à l'intérieur d'une des rainures 12b du plateau inférieur. Les moyens de chauffage 42 sont décalés axialement vers l'extérieur par rapport à la coquille 16, aux secteurs 20 et à la couronne 26 de serrage. Les moyens de chauffage 42 sont situés axialement entre les faces externes de la coquille 16, des secteurs 20 et de la couronne 26 et entre le fond des rainures 12b.

De manière similaire, chaque moyen de chauffage 44 supérieur est logé à l'intérieur d'une des rainures 14b du plateau supérieur et est décalé axialement vers l'extérieur par rapport à la coquille 18, aux secteurs 22 et à la couronne 28 de serrage. Les moyens de chauffage 44 sont situés axialement entre les faces externes de la coquille 18, des secteurs 22 et de la couronne 28 et entre le fond des rainures 14c.

Pour chaque plateau 12, 14 de support, les moyens de chauffage 42, 44 associés sont répartis selon trois groupes. Les moyens de chauffage 42, 44 du premier groupe sont montés à l'intérieur du premier groupe de rainures 12b, 14b et viennent axialement en regard de la coquille 16, 18. Les moyens de chauffage 42, 44 du deuxième groupe, respectivement du troisième groupe, sont montés à l'intérieur du deuxième groupe, respectivement du troisième groupe, de rainures 12b, 14b et viennent axialement en regard des secteurs 20, 22, respectivement de la couronne 26, 28 de serrage. Les moyens de chauffage 42, 44 sont orientés axialement vers l'intérieur en direction de la coquille 16, 18 ou des secteurs 20, 22 ou de la couronne 26, 28 de serrage. Aucun moyen est interposé axialement entre ces éléments du moule 10 et les moyens de chauffage 42, 44.

Comme indiqué précédemment, dans la position de fermeture du moule 10, la face interne 12a, 14a de chaque plateau vient axialement en contact contre la coquille 16, 18 et contre les secteurs 20, 22. Dans l'exemple de réalisation illustré, les moyens de chauffage 42, 44 affleurent axialement avec la face interne 12a, 14a du plateau associé. Ainsi, les moyens de chauffage 42, 44 portés par les plateaux 12, 14 sont également axialement en contact contre les coquilles 16, 18 et les secteurs 20, 22.

De tels contacts entre les moyens de chauffage 42, 44 et entre les coquilles 16, 18 et les secteurs 20, 22 favorisent les transferts thermiques par conduction à l'intérieur du moule 10. En variante, les moyens de chauffage 42, 44 peuvent être légèrement espacés axialement par rapport aux coquilles et/ou aux secteurs. Dans ce cas, les transferts de chaleur s'effectuent principalement par rayonnement.

Comme indiqué précédemment, les moyens de chauffage 42, 44 du troisième groupe de chaque plateau 12, 14 de support sont axialement en regard de la couronne 26, 28 de serrage. Ces moyens de chauffage 42, 44 ne sont pas utilisés pour le chauffage des couronnes 26, 28 de serrage. Des moyens de chauffage spécifiques (non représentés) du moule 10 sont disposés à cet effet axialement entre les plateaux 12, 14 et radialement autour des faces extérieures desdites couronnes. En variante, chaque couronne 26, 28 de serrage peut comporter une cavité circulaire dans laquelle circule un fluide caloporteur. Le troisième groupe de chacun des moyens de chauffage 42, 44 est prévu pour obtenir l'adaptabilité des plateaux 12, 14 du moule 10 à des modèles de pneumatiques de diamètres plus importants et pour pouvoir assurer le chauffage des coquilles et des secteurs associés à de tels pneumatiques. Les mêmes plateaux 12, 14 peuvent ainsi être utilisés pour le chauffage de coquilles et de secteurs présentant des dimensions différentes. Ceci est particulièrement utile lorsque les plateaux 12, 14 reste montés sur la presse de vulcanisation. Dans l'exemple de réalisation illustré, seulement les premier et deuxième groupes de moyens de chauffage 42, 44 associées aux coquilles 16, 18 et aux secteurs 20, 22 sont actifs.

Les plateaux 12, 14 remplissent une double fonction de support, à savoir le support des coquilles 16, 18 ainsi que le support des moyens de chauffage 42, 44. Chaque plateau 12, 14 est réalisé dans un matériau isolant thermiquement et présentant une conductivité thermique inférieure à la conductivité thermique du matériau des coquilles 16 et 18, inférieure à la conductivité thermique de chacun des matériaux des secteurs 20 et 22, et inférieure à la conductivité thermique du matériau des couronnes 26, 28. Avantageusement, chaque plateau 12, 14 est réalisé en un matériau non métallique, notamment en un matériau composite qui peut par exemple être à base de ciment et de fibres inorganiques. En variante, d'autres types de matériaux isolant thermiquement peuvent être prévus. Chaque plateau 12, 14 peut présenter une épaisseur axiale comprise entre 35 mm et 60 mm.

La réalisation de chaque plateau 12, 14 dans un matériau isolant thermiquement et le montage des moyens de chauffage 42, 44 à l'intérieur des rainures 12b, 14b permettent l'obtention d'un bon rendement énergétique du moule 10. En effet, la réalisation de chaque plateau 12, 14 dans un matériau isolant thermiquement favorise une diffusion de la chaleur générée en direction des coquilles 16, 18 et des secteurs 20, 22. En outre, la chaleur est produite au voisinage immédiat des faces externes de ces éléments du moule 10. Par ailleurs, la disposition des moyens de chauffage 42, 44 sur les plateaux 12, 14 de support des coquilles favorise la compacité axiale du moule 10.

Le moule 10 comprend encore une unité de pilotage (non représentée) apte à assurer le contrôle de fonctionnement des moyens de chauffage 42, 44. L'unité de pilotage permet de contrôler chaque moyen de chauffage 42, 44 indépendamment du fonctionnement des autres moyens de chauffage de sorte à pouvoir chauffer une zone du moule à une température différente de celle à laquelle est chauffée une autre zone distincte et adjacente.

Par exemple, lors de la cuisson, les deux coquilles 16, 18 du moule peuvent être chauffées par les moyens de chauffage 42, 44 des premiers groupes à une température différente de celle à laquelle sont chauffés les secteurs 20, 22 par les moyens de chauffage 42, 44 des deuxièmes groupes. Chaque plateau 12, 14 isolant thermiquement permet de limiter les échanges de chaleur à l'intérieur dudit plateau de sorte à pouvoir maintenir sensiblement constant l'écart thermique prévu entre les coquilles 16, 18 et les secteurs 20, 22. La cuisson du pneumatique est ainsi optimisée. Il est également possible de commander, pour chacune des coquilles 16 et 18, un chauffage différentiel entre une zone de ladite coquille et une autre zone distincte. Une telle différentiation thermique peut également être commandée pour les secteurs 20, 22.

Dans l'exemple de réalisation illustré, chaque plateau 12, 14 de support est entièrement réalisé dans un matériau isolant thermiquement. Chaque plateau 12, 14 est constitué d'un corps en matériau isolant thermiquement. Dans une variante de réalisation, il pourrait être envisageable de réaliser chaque plateau de support en plusieurs parties et pourvu par exemple d'un corps réalisé en matériau isolant thermiquement et comprenant les rainures formées sur la face interne de contact à l'intérieur desquelles sont logés les moyens de chauffage, et d'une partie distincte pouvant par exemple être métallique recouvrant le corps axialement du côté opposé aux rainures et prévu pour venir axialement en contact avec la presse de vulcanisation.

Dans l'exemple de réalisation illustré, chaque plateau de support comprend une pluralité de rainures formant évidements associée chacune à un moyen de chauffage. En variante, il pourrait être possible de monter deux moyens de chauffage à l'intérieur d'une même rainure. Dans une autre variante, il pourrait encore être possible de prévoir un unique évidement formé sur la face interne d'appui de chaque plateau, de monter les moyens de chauffage 42 ou 44 à l'intérieur dudit évidement, et de prévoir des cloisons isolantes thermiquement entre deux moyens de chauffage adjacents. Une telle solution est toutefois plus complexe à mettre en oeuvre.

Dans l'exemple de réalisation décrit, les moyens de chauffage sont réalisés sous la forme de résistances électriques chauffantes. En variante, il est possible de prévoir d'autres types de moyens de chauffage, par exemple des tubes métalliques traversés par un fluide caloporteur, notamment de l'eau ou de la vapeur sous pression présentant une température supérieure à 150°C, en provenance d'un circuit de fluide caloporteur comportant des moyens de commande de la circulation de fluide à l'intérieur de chaque tube indépendamment.

La présente invention a été illustrée sur la base d'un moule comprenant un jeu de secteurs inférieurs et un jeu de secteurs supérieurs pour assurer le moulage de la bande de roulement du pneumatique. Il est également possible, sans sortir du cadre de l'invention, de prévoir un moule comprenant un seul jeu de secteurs pour le moulage de cette partie du pneumatique. Dans ce cas, une unique couronne de serrage est prévue pour le moule.

## Revendications

1. Moule pour pneumatique du type comprenant une bande de roulement et deux flancs latéraux, le moule comprenant des première et deuxième coquilles (16, 18) destinées à assurer le moulage des flancs latéraux du pneumatique, une pluralité de secteurs (20, 22) répartis dans le sens circonférentiel et destinés à assurer le moulage de la bande de roulement dudit pneumatique, des premier et deuxième plateaux (12, 14) de support comprenant chacun une face d'appui (12a, 14a) contre laquelle est montée axialement en contact la coquille associée, une pluralité de premiers moyens de chauffage (42) et de deuxième moyens de chauffage (44) pour chauffer respectivement au moins la première et la deuxième coquilles (16, 18), **caractérisé en ce que** chaque plateau (12, 14) de support comprend au moins un corps réalisé en matériau isolant thermiquement et délimitant la face d'appui (12a, 14a) dudit plateau, au moins un évidement (12b, 14b) étant formé sur ladite face d'appui et à l'intérieur duquel sont logés les premiers ou deuxièmes moyens de chauffage (42, 44).

2. Moule selon la revendication 1, dans lequel une pluralité d'évidements (12b, 14b) espacés est formée sur la face d'appui (12a, 14a) de chaque plateau de support et à l'intérieur de chacun duquel est logé un des premiers ou deuxièmes moyens de chauffage (42, 44).

3. Moule selon la revendication 1 ou 2, dans lequel chaque moyen de chauffage (42, 44) est apte à générer de la chaleur indépendamment de l'activation des autres moyens de chauffage.

4. Moule selon l'une quelconque des revendications précédentes, dans lequel le ou les évidements (12b, 14b) de chaque plateau de support sont orientés axialement vers l'intérieur dudit moule.

5. Moule selon l'une quelconque des revendications précédentes, dans lequel le ou les évidements (12b, 14b) de chaque plateau de support sont réalisés sous la forme de rainures annulaires et concentriques.

6. Moule selon l'une quelconque des revendications précédentes, dans lequel les premiers et deuxièmes moyens de chauffage (42, 44) comprennent chacun au moins un premier groupe de moyens de chauffage disposés axialement en regard de la coquille (16, 18) associée.

7. Moule selon la revendication 6, dans lequel les premiers et deuxièmes moyens de chauffage (42, 44) comprennent chacun au moins un deuxième groupe de moyens de chauffage disposés axialement en regard des secteurs (20, 22).

8. Moule selon l'une quelconque des revendications précédentes, dans lequel les secteurs (20, 22) sont montés axialement en contact contre les faces d'appui (12a, 14a) des plateaux de support dans une position de fermeture dudit moule.

9. Moule selon l'une quelconque des revendications précédentes, comprenant au moins une couronne (26, 28) de serrage coopérant avec des faces extérieures des secteurs (20, 22).

10. Moule selon l'une quelconque des revendications précédentes, dans lequel le corps de chaque plateau de support (12, 14) est réalisé en matériau isolant thermiquement présentant une conductivité thermique inférieure à celles des matériaux des secteurs et des coquilles.

11. Moule selon l'une quelconque des revendications précédentes, dans lequel le corps de chaque plateau de support (12, 14) est réalisé en un matériau non métallique, notamment en un matériau composite.

12. Moule selon l'une quelconque des revendications précédentes, dans lequel le corps de chaque plateau de support (12, 14) présente une épaisseur axiale comprise entre 35 mm et 60 mm.

13. Moule selon l'une quelconque des revendications précédentes, dans lequel les premiers et deuxièmes moyens de chauffage (42, 44) sont électriques.

14. Procédé de moulage d'un pneumatique à l'aide d'un moule selon l'une quelconque des revendications précédentes, dans lequel on commande le fonctionnement des premiers et deuxièmes moyens de chauffage pour chauffer les deux coquilles à une température différente de celle à laquelle sont chauffés les secteurs du moule.

## Patentansprüche

1. Form für Reifen des Typs, welcher einen Laufstreifen und zwei Seitenwände umfasst, wobei die Form eine erste und eine zweite Seitenplatte (16, 18), die dazu bestimmt sind, die Formung der Seitenwände des Reifens sicherzustellen, mehrere Segmente (20, 22), die in der Umfangsrichtung verteilt sind und dazu bestimmt sind, die Formung des Laufstreifens des Reifens sicherzustellen, eine erste und eine zweite Tragplatte (12, 14), die jeweils eine Anlagefläche (12a, 14a) umfassen, mit welcher die zugeordnete Seitenplatte axial in Kontakt stehend angebracht ist, und mehrere erste Heizmittel (42) und zweite Heizmittel (44) zum Erwärmen wenigstens der ersten bzw. der zweiten Seitenplatte (16, 18) umfasst, **dadurch gekennzeichnet, dass** jede Tragplatte (12, 14) wenigstens einen Körper umfasst, der aus thermisch isolierendem Material hergestellt ist und die Anlagefläche (12a, 14a) der Platte begrenzt, wobei wenigstens eine Aussparung (12b, 14b) in der Anlagefläche ausgebildet ist, in deren Innerem die ersten oder zweiten Heizmittel (42, 44) aufgenommen sind.

2. Form nach Anspruch 1, wobei mehrere beabstandete Aussparungen (12b, 14b) in der Anlagefläche (12a, 14a) jeder Tragplatte ausgebildet sind und im Inneren einer jeden von ihnen eines der ersten oder zweiten Heizmittel (42, 44) aufgenommen ist.

3. Form nach Anspruch 1 oder 2, wobei jedes Heizmittel (42, 44) in der Lage ist, unabhängig von der Aktivierung der anderen Heizmittel Wärme zu erzeugen.

4. Form nach einem der vorhergehenden Ansprüche, wobei die Aussparung(en) (12b, 14b) jeder Tragplatte axial zum Inneren der Form hin ausgerichtet sind.

5. Form nach einem der vorhergehenden Ansprüche, wobei die Aussparung(en) (12b, 14b) jeder Tragplatte in der Form von ringförmigen und konzentrischen Nuten ausgebildet sind.

6. Form nach einem der vorhergehenden Ansprüche, wobei die ersten und zweiten Heizmittel (42, 44) jeweils eine erste Gruppe von Heizmitteln umfassen, die axial gegenüber den zugeordneten Seitenplatte (16, 18) angeordnet sind.

7. Form nach Anspruch 6, wobei die ersten und zweiten Heizmittel (42, 44) jeweils eine zweite Gruppe von Heizmitteln umfassen, die axial gegenüber den Segmenten (20, 22) angeordnet sind.

8. Form nach einem der vorhergehenden Ansprüche, wobei die Segmente (20, 22) in einer Schließposition der Form mit den Anlageflächen (12a, 14a) der Tragplatten axial in Kontakt stehend angebracht sind.

9. Form nach einem der vorhergehenden Ansprüche, welche wenigstens einen Schließkranz (26, 28) umfasst, der mit den Außenseiten der Segmente (20, 22) zusammenwirkt.

10. Form nach einem der vorhergehenden Ansprüche, wobei der Körper jeder Tragplatte (12, 14) aus thermisch isolierendem Material hergestellt ist, welches eine Wärmeleitfähigkeit aufweist, die niedriger als diejenigen der Materialien der Segmente und der Seitenplatten ist.

11. Form nach einem der vorhergehenden Ansprüche, wobei der Körper jeder Tragplatte (12, 14) aus einem nichtmetallischen Material hergestellt ist, insbesondere aus Verbundwerkstoff.

12. Form nach einem der vorhergehenden Ansprüche, wobei der Körper jeder Tragplatte (12, 14) eine axiale Dicke zwischen 35 mm und 60 mm aufweist.

13. Form nach einem der vorhergehenden Ansprüche, wobei die ersten und zweiten Heizmittel (42, 44) elektrisch sind.

14. Verfahren zur Formung eines Reifens mithilfe einer Form nach einem der vorhergehenden Ansprüche, wobei der Betrieb der ersten und zweiten Heizmittel gesteuert wird, um die zwei Seitenplatten auf eine Temperatur zu erwärmen, die verschieden von derjenigen ist, auf welche die Segmente der Form erwärmt werden.

## Claims

1. Mould for a tyre of the type comprising a tread and two lateral sidewalls, the mould comprising first and second shells (16, 18) that are intended to mould the lateral sidewalls of the tyre, a plurality of sectors (20, 22) that are distributed in the circumferential direction and are intended to mould the tread of said tyre, a first and a second support plate (12, 14) that each comprise a bearing face (12a, 14a) with which the associated shell is mounted axially in contact, a plurality of first heating means (42) and second heating means (44) for heating at least the first and the second shell (16, 18), respectively, **characterized in that** each support plate (12, 14) comprises at least one body that is made of a thermally insulating material and delimits the bearing face (12a, 14a) of said plate, at least one recess (12b, 14b) being formed in said bearing face, the first or second heating means (42, 44) being accommodated in said recess (12b, 14b).

2. Mould according to Claim 1, wherein a plurality of spaced-apart recesses (12b, 14b) are formed in the bearing face (12, 14a) of each support plate, one of the first or second heating means (42, 44) being accommodated inside each of said recesses (12b, 14b).

3. Mould according to Claim 1 or 2, wherein each heating means (42, 44) is able to generate heat independently of the activation of the other heating means.

4. Mould according to any one of the preceding claims, wherein the recess(es) (12b, 14b) in each support plate are oriented axially towards the inside of said mould.

5. Mould according to any one of the preceding claims, wherein the recess(es) (12b, 14b) in each support plate are made in the form of annular and concentric grooves.

6. Mould according to any one of the preceding claims, wherein the first and second heating means (42, 44) each comprise at least one first group of heating means disposed axially facing the associated shell (16, 18).

7. Mould according to Claim 6, wherein the first and second heating means (42, 44) each comprise at least one second group of heating means disposed axially facing the sectors (20, 22).

8. Mould according to any one of the preceding claims, wherein the sectors (20, 22) are mounted axially in contact with the bearing faces (12a, 14a) of the support plates in a closed position of said mould.

9. Mould according to any one of the preceding claims, comprising at least one clamping ring (26, 28) that cooperates with outer faces of the sectors (20, 22).

10. Mould according to any one of the preceding claims, wherein the body of each support plate (12, 14) is made of a thermally insulating material that has a thermal conductivity lower than that of the materials of the sectors and of the shells.

11. Mould according to any one of the preceding claims, wherein the body of each support plate (12, 14) is made of a non-metal material, notably of a composite material.

12. Mould according to any one of the preceding claims, wherein the body of each support plate (12, 14) has an axial thickness of between 35 mm and 60 mm.

13. Mould according to any one of the preceding claims, wherein the first and second heating means (42, 44) are electric.

14. Method for moulding a tyre with the aid of a mould according to any one of the preceding claims, wherein the operation of the first and second heating means is controlled such that they heat the two shells to a temperature different from that to which the sectors of the mould are heated.
